# EUROPEAN PATENT APPLICATION

(11) **EP 1 914 982 A1**
(43) Date of publication of application: **23.04.2008**
(21) Application number: 06781180.2
(22) Date of filing: 18.07.2006
(51) Int. Cl.: H04N 5/232, G03B 5/00, G03B 7/093, H04N 5/243, H04N 101/00

(54) **IMAGING DEVICE**

(30) Priority: 19.07.2005 JP 2005209249
(71) Applicant: Sharp Kabushiki Kaisha, Osaka-shi, Osaka 545-8522 (JP)
(72) Inventor: MURAMATSU, Takeharu, Chiba-shi, Chiba (JP); NOSE, Takayoshi, Sakura-shi, Chiba (JP); HAGINO, Yoshio, Chiba-shi, Chiba (JP); TANAKA, Shinji, Midori-ku, Chiba-shi, Chiba (JP)
(74) Representative: Müller - Hoffmann & Partner
(86) International application number: PCT/JP2006/314159
(87) International publication number: WO 2007/010891

(57) **Abstract**

It is possible to correct camera shaking even in an imaging device such as a camera-equipped mobile telephone having no sufficient ability for rapidly acquiring a plurality of images and a limited memory capacity. There is suggested an imaging device capable of correcting camera shaking by utilizing a small image such as a preview image and a target image to be obtained when a user of the imaging device clicks a shutter. The preview image has an appropriate exposure but has a high possibility that camera shaking has occurred. The target image is captured by insufficient exposure because of rapid shutter speed but the camera shaking is reduced. The image information on the target image is corrected by the image information on the preview image so as to obtain an image of reduced camera shaking and appropriate exposure.

## Description

### BACKGROUND OF THE INVENTION

### Field of the Invention

The present invention relates to an imaging apparatus for imaging a still image, and specifically relates to image stabilizing technology.

### Description of the Related Art

Normally, when imaging an object by an imaging apparatus such as a digital camera or a mobile phone equipped with a camera, a person usually holds the imaging apparatus with his hands. This causes degradation of image quality due to 'camera shaking' etc. upon imaging the object. In order to solve the problem, for example, in Japanese Unexamined Patent Application Publication No. 9-261526, a plurality of images imaged within short exposure time, in which image blur is negligible, are overlapped by matching positions, thereby correcting its brightness and acquiring an image of suppressed image blur.

However, the method of Japanese Unexamined Patent Application Publication No. 9-261526 is applicable only to a digital camera having sufficient processing speed and memory capacity, and it is difficult for a mobile phone equipped with a camera etc. having insufficient processing power to capture a plurality of images at high-speed, and having a limitation on its memory capacity, to temporary store a plurality of large images.

### SUMMARY OF THE INVENTION

In order to solve the above deficiency, the present invention provides an imaging apparatus that can correct image blur by means of small image such as a preview image utilized for preview display, and of a target image, which a user desires to acquire by click of a shutter of an imaging apparatus (hereinafter, referred to as target image). Here, the 'preview display' is a display utilized as a finder when a user shoots an object by the imaging apparatus. For example, in cases where the imaging apparatus is the mobile phone equipped with a camera, the user views the object, captured by the camera and displayed on a liquid crystal display of the mobile phone, and clicks a shutter when shooting an object. In this case, the above display corresponds to the preview display. Further, the preview image is displayed on a liquid crystal display upon preview display, and is smaller than the target image.

In the normal imaging apparatus, exposure is controlled according to surrounding brightness etc., thereby carrying out imaging of adequate exposure. However, if the shutter speed becomes slow by the exposure control, there is a high possibility that image blur occurs. Meanwhile, in the imaging apparatus of the present invention, it is assumed that the small image such as the preview image of adequate exposure includes image blur, and in the case of target image, shutter speed is set to be high so as to suppress image blur. Consequently, the target image becomes an image of suppressed image blur, but of under exposure, and brightness information of the target image is corrected by utilizing the brightness information of an image of adequate exposure such as the preview image. Although the above case is based on using the small image, if the processing power and memory capacity of the camera is sufficient, it is not necessary to use small image in the correction of image blur in the imaging apparatus of the present invention. Therefore, an image of adequate exposure possibly including image blur, and an image of under exposure hardly including image blur, which have the same size, may be utilized for correction of image blur. Moreover, small image other than the preview image may be used. Moreover, order of imaging the preview image and of imaging the target image is no object. The present invention can correct 'image blur' due to various causations of shaking the imaging apparatus other than the 'camera shake'. For example, image blur due to vibration of a mount of imaging apparatus is included.

According to the imaging apparatus of the present invention, an image of adequate exposure possibly including image blur, and an image of under exposure hardly including image blur may be utilized for correction of image blur, so that it is possible to acquire an image of suppressed image blur just by correcting the image information of the image of under exposure based on the image information of the image of adequate exposure.

### BRIEF DESCRIPTION OF THE DRAWINGS

Fig. 1 is a functional block diagram of an imaging apparatus of a first embodiment.
Fig. 2 is a functional block diagram of an imaging apparatus of a first embodiment.
Fig. 3 is a diagram showing exposure time to be controlled by the first and second control means.
Fig. 4(a) and (b) are schematic diagrams showing synthesizing by means of first and second images in a synthesizing unit.
Fig. 5 is a diagram showing a concrete example of correction method in the correction means for second brightness information.
Fig. 6 is a flow chart of an imaging apparatus of the first embodiment.
Fig. 7 is a flow chart of an imaging apparatus of the first embodiment.
Fig. 8 is a functional block diagram of an imaging apparatus of a second embodiment.
Fig. 9 is a flow chart of an imaging apparatus of the second embodiment.
Fig. 10 is a functional block diagram of an imaging apparatus of a third embodiment.
Fig. 11 is a flow chart showing concrete process of a controller for preventing image blur.
Fig. 12 is a functional block diagram of an imaging apparatus of a fourth embodiment.
Fig. 13 is a diagram showing an addition of pixels.
Fig. 14 is a functional block diagram of an imaging apparatus of a fifth embodiment.
Fig. 15(a) and (b) are diagrams showing block matching.
Fig. 16 is a flow chart of an imaging apparatus of the fifth embodiment.
Fig. 17 is a diagram showing a concrete configuration of the imaging apparatus.

### DETAILED DESCRIPTION OF THE INVENTION

Embodiments of the present invention will be described hereinbelow with reference to the drawings. The present invention is not to be limited to the above embodiments and can be embodied in various forms without departing from the scope thereof.

### <<First embodiment>>

### <Concept of First Embodiment>

An imaging apparatus of a first embodiment is an imaging apparatus, which synthesizes image information of an image by partially utilizing image information of said plurality of images.

### <Configuration>

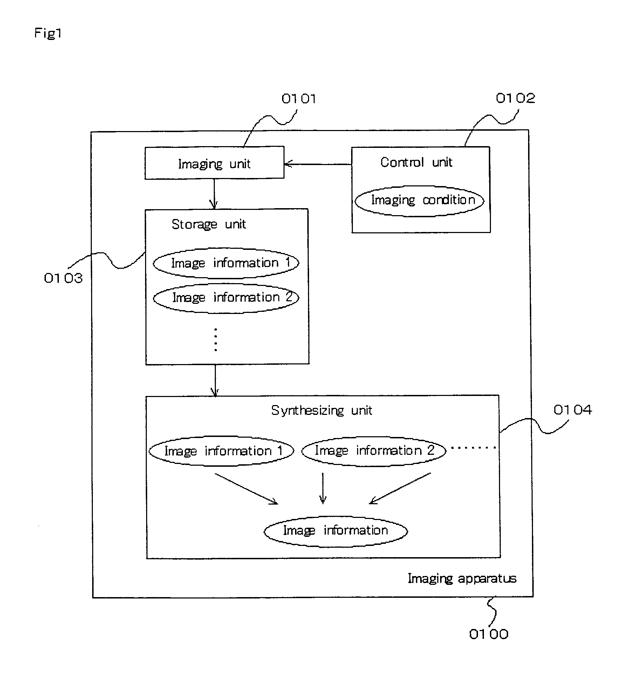

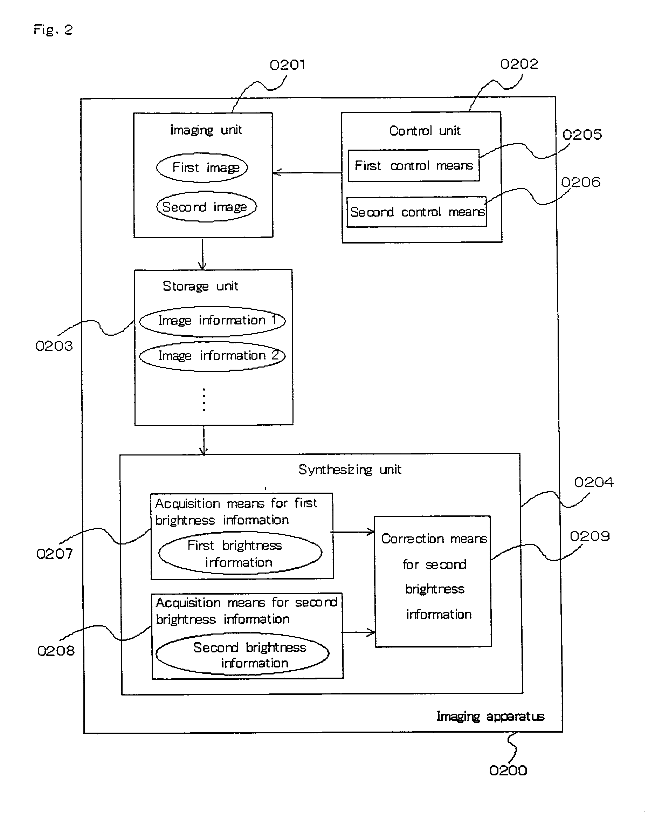

Figs. 1 and 2 are functional block diagrams of imaging apparatuses of the first embodiment. In Fig. 1, an imaging apparatus (0100) comprises, an 'imaging unit' (0101), a 'control unit' (0102), a 'storage unit' (0103), and a 'synthesizing unit' (0104).

In addition, in Fig. 2, an imaging apparatus (0200) comprises, an 'imaging unit' (0201), a 'control unit' (0202), a 'storage unit' (0203), and a 'synthesizing unit' (0204). Moreover, said control unit (0202) comprises, a 'first control means' (0205), and a 'second control means' (0206). Moreover, said synthesizing unit (0204) may comprise, an 'acquisition means for first brightness information' (0207), an 'acquisition means for second brightness information' (0208), and a 'correction means for second brightness information' (0209). Therefore, the imaging apparatus as shown in Fig. 1 further comprises the 'first control means' (0205), and the 'second control means' (0206), the 'acquisition means for first brightness information' (0207), the 'acquisition means for second brightness information' (0208), and the 'correction means for second brightness information' (0209).

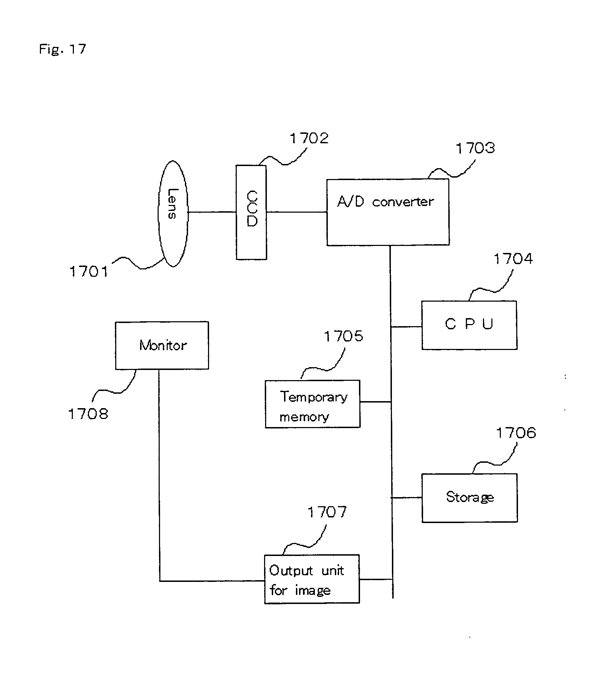

Note that the respective units of the present invention can be configured by hardware, software, or both hardware and software. For example, in the case of using a computer, the respective units are implemented by the hardware configured by a CPU, a memory, a bus, an interface, and other peripheral devices etc., and by the software operable on the hardware. Concretely speaking, by sequentially carrying out programs on the memory, the data on the memory and the data inputted via the interface are processed, stored, and outputted etc., thereby implementing functions of the respective units. Further, Fig. 17 is a diagram showing a concrete configuration of the imaging apparatus, and shows an imaging apparatus comprising a lens (1701), a CCD (1702), a A/D converter (1703), a CPU (1704), a temporary memory (1705), a storage (1706), an output unit for image (1707), and a monitor (1708) etc (Hereinafter, the same applies thorough the entire specification).

The 'imaging unit' (0101) has a function of imaging an object. For example in Fig. 17, the term 'imaging' means that light from an object passes through an optical system such as the lens (1701), and is received by an imaging device such as the CCD (1702), thereby being converted to electric signal. Subsequently, the electric signal is converted to digital signal by the A/D converter (1703), thereby generating image information by the image processor (1704). Further, the imaging unit performs imaging under imaging condition controlled by the control unit (0102). Examples of the 'imaging condition' include exposure time (corresponding to shutter speed), and imaging interval in imaging a plurality of images.

The 'control unit' (0102) has a function of controlling imaging condition in the imaging unit (0101). The 'controlling imaging condition' means that, concretely speaking, the exposure time and the imaging are determined. For example, as in the case of the conventional camera, it means that adequate exposure time is calculated and set according to surrounding brightness, or in cases where the possibility of occurrence of image blur is high because of the long exposure time, the exposure time is set to be shorter. For example, in the imaging unit, the values such as exposure time and imaging interval are stored in a predetermined storage area such as the temporary memory (1705) and the storage (1706) in Fig. 17. Setting values are written into this predetermined storage area, thereby carrying out setting of the conditions. Further, the imaging unit may include a program for causing a computer to carry out such processing.

The control unit may comprise the 'first control means' (0205), and the 'second control means' (0206) as shown in Fig. 2.

The 'first control means' (0205) has a function of carrying out control, so that a first image, one of a plurality of images to be imaged, is an image of adequate exposure. When controlling exposure to be adequate, there is high possibility of image blur. The reason for this is that as the shutter speed becomes slower, the possibility of image blur etc. becomes higher, and in the case of adequate exposure, if the surrounding brightness is not enough, the shutter speed normally becomes slower. Therefore, the first control means controls imaging condition so as to acquire an image, which includes image blur, but is adequate exposure.

The 'second control means' (0206) carries out control, such that a second image, one of a plurality of images to be imaged, is imaged at relatively high shutter speed. The terms 'relatively high shutter speed' means that the shutter speed is faster than the shutter speed controlled by the first control means (0205). Concretely speaking, it is faster than the shutter speed for adequate exposure. As the shutter speed becomes faster, the possibility of image blur becomes lower, thereby acquiring an image, in which image blur is reduced, but exposure is reduced, so that the second image becomes darker than the first image. Therefore, the second control means carries out control of the imaging condition so as to acquire an image, in which exposure is not enough, but image blur is reduced. Note that the imaging order of the first image and second image is no object.

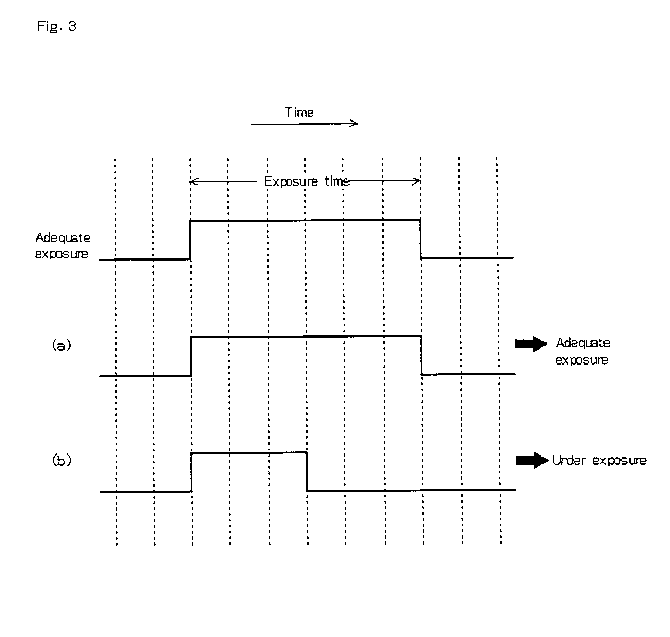

Fig. 3 is a diagram showing exposure time to be controlled by the first and second control means. If the upper graph indicates exposure time of the adequate exposure, Fig. 3 (a) indicates exposure time of the first image, therefore, the exposure time controlled by the first control means. Since the exposure time is the same as that of the adequate exposure, the first image is imaged at the adequate exposure. Fig. 3 (b) indicates the exposure time of the second image, therefore, the exposure time controlled by the second control means. Since the exposure time is shorter than that of the adequate exposure, the second image becomes underexposure.

The 'storage unit' (0103) has a function of storing image information of a plurality of images imaged within a short period of time under various imaging conditions controlled by the control unit. The terms 'a plurality of images imaged within a short period of time under various imaging conditions' correspond, for example, to the first image imaged under control by the first control means (0205), and the second image imaged under control by the first control means (0206). The terms 'within a short period of time' means within a time, in which image blur hardly occurs. This has a merit that as the imaging intervals between the plurality of images becomes shorter, the possibility of image blur becomes lower, thereby reducing positional difference of objects between images. For example, normally, if the imaging interval is under 1/60 sec (16 mm/sec), no positional difference between images is detected. Further, in the synthesizing unit (0104), it is required to synthesize a plurality of images after alignment of the plurality of images in cases where the positional difference of objects between the images exists. However, in cases where the imaging interval is under 1/60 sec (16 mm/sec), it is unnecessary to consider the positional difference, so that the images continuously imaged are the same (their brightness is different), thereby reducing processing load in synthesizing. Further, the 'image information' is information for implementing an image, and an example of it includes information indicated by numerical value such as RGB value or YUV value of each pixel. The brightness information (Y) is normally indicated by RGB values, and is acquired by a formula 'Y = 0.299R + 0.587G + 0.114B' (hereinafter, referred to as 'formula 1'). Therefore, the brightness information may be included in image information. The storage unit is implemented by the temporary memory (1705), and the storage (1706) shown in Fig. 17. In addition, the storage unit may include a program for causing the CPU (1704) to execute processing for storing the image information.

The 'synthesizing unit' (0104) has a function of synthesizing image information of an image by partially utilizing image information of the plurality of images. The terms 'by partially utilizing image information of the plurality of images' means that the entire image information may not be utilized. For example, this corresponds to the case of synthesizing by correcting RGB value of a portion of an image. Further, the term 'an image' is an image to be finally acquired, and is an image of adequate exposure in which image blur is reduced.

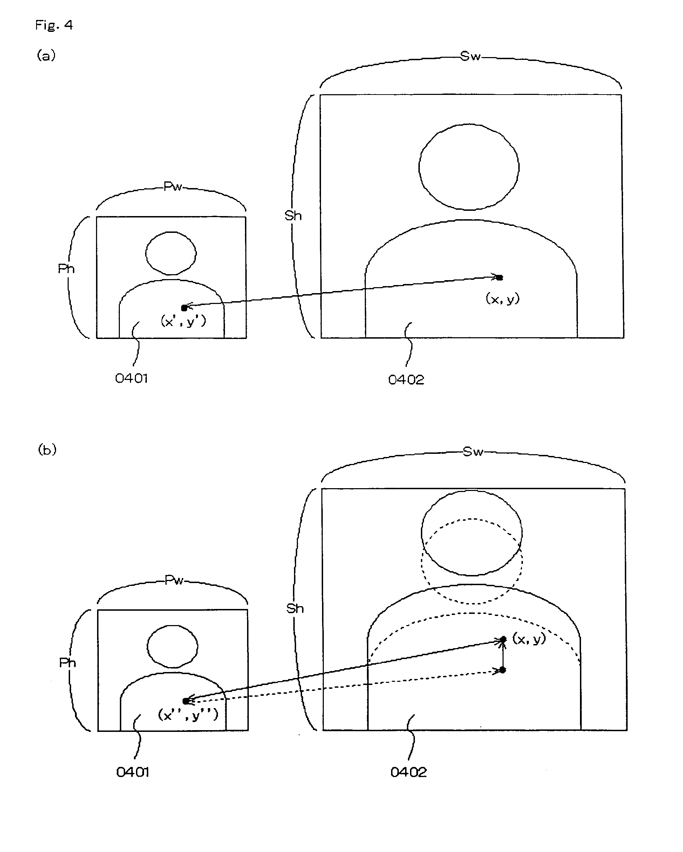

Fig. 4 is a schematic diagram showing synthesizing by means of a first and second images in a synthesizing unit. Fig. 4 shows the case where the first image (0401) and the second image (0402) have different sizes. Further, Fig. 4(a) shows the case where there is no positional difference between the first and second images, and Fig. 4(b) shows the case that there is positional difference between the first and second images. It is assumed that vertical size of the first image (0401) is Ph, and its horizontal size is Pw, and vertical size of the second image (0402) is Sh, and its horizontal size is Sw. In Fig 4(a), if the corresponding points of the pixel (x', y') of the first image (0401) are (x, y) of the second image (0402), there is no difference in Fig. 4(a), thereby establishing a formula x' = αx, y' = βy. Here, α and β are horizontal and vertical reduction ratios between the first and second images, and α = Pw/Sw, β = Ph/Sh. Further, in Fig. 4(b), if distance of positional difference is (Mx, My), and the corresponding points of the pixel (x'', y") of the first image (0401) are (x, y) of the second image (0402), a formula x" = αx + Mx, y" = βy + My are estimated. Thus, the correspondence relation between the respective pixels in the first and second images is acquired. In addition, by utilizing this correspondence relation, for example, it is possible to compare brightness information of the corresponding pixels in order to correct the brightness, thereby carrying out synthesizing. Further, the distance of positional difference (Mx, My) can be acquired by detection such as block matching or edge detection. Concretely speaking, in the processing by the synthesizing unit, the image information of the first and second images, stored in a predetermined storage area such as the temporary memory (1705) and the storage (1706) in Fig. 17 by the storage unit (0103), are read, thereby detecting positional difference. The detection result of the positional difference is stored in the predetermined storage area such as the temporary memory (1705). Subsequently, the correspondence relation between the respective pixels is calculated from the read image information and the detected positional difference, and the calculation result is also stored in the predetermined storage area such as the temporary memory (1705). Based on this calculation result, synthesizing is carried out by correcting the brightness information, and the image information generated by synthesizing is stored in the predetermined storage area such as the temporary memory (1705) and the storage (1706). Further, the synthesizing unit may include a program for causing the CPU (1704) to execute the above process.

In addition, as shown in Fig. 2, the synthesizing unit may comprise the 'acquisition means for first brightness information' (0207), the 'acquisition means for second brightness information' (0208), and the 'correction means for second brightness information' (0209).

The 'acquisition means for first brightness information' (0207) has a function of acquiring first brightness information of the first image. The 'first brightness information of the first image' may be brightness information in all pixels configuring the first image, or may be brightness information of pixels, a portion of the image. Further, the brightness information is expressed by means of each value of RGB values as the formula 1, the brightness information may be a combination of RGB values, not Y value.

The 'acquisition means for second brightness information' (0208) has a function of acquiring second brightness information of the second image. The 'second brightness information of the second image' may be brightness information in all pixels configuring the second image, or may be brightness information of pixels, a portion of the image.

The 'correction means for second brightness information' (0209) has a function of correcting the second brightness information by means of the first brightness information. The first brightness information is acquired from the first image, which is an image of adequate exposure, but includes high-possibility of image blur, and the second brightness information is acquired from the second image, which is an image of under exposure, but includes suppressed image blur. Therefore, by correcting the second brightness information of the second image of under exposure by means of the first brightness information of the first image of adequate exposure, it is possible to acquire an image, which includes suppressed image blur and is adequate exposure.

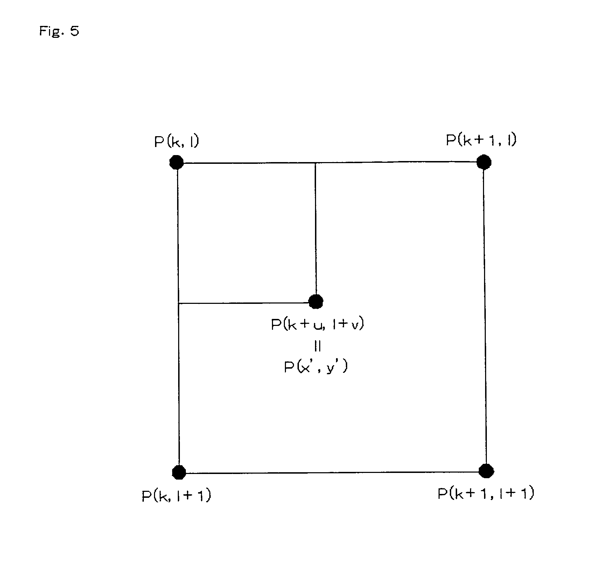

Fig. 5 is a diagram showing a concrete example of correction method in the correction means for second brightness information. Similar to Fig. 4, if distance of positional difference is (Mx, My), and α = Pw/Sw, and β = Ph/Sh, relation between the pixel (x', y') of the first image and the pixel (x, y) of the second image is expressed by a formula x' = αx + Mx, y' = βy + My (hereinafter, referred to as 'formula 2'). Normally, since brightness of a pixel varies in proportion to length of exposure time (e.g., if the exposure time becomes twice, the brightness of pixel becomes twice), by increasing pixel values (e.g., RGB values) of the respective pixels indicated by the image information of the second image according to the ratio of exposure time between the first and second images, brightness of the second image becomes equal to that of the first image. Meanwhile, in this case, noise is also amplified. Hereinafter, correction of pixel values by a method for reducing noise components by averaging with the pixel value of the first image by means of linear interpolation will be described. Note that the brightness information is determined by RGB values as the formula 1, so that the correction of pixel value is synonymous with the correction of brightness information. As to the linear interpolation, it is well known, so that description is omitted. It is assumed that the integral portion of x', calculated by the formula 2, is k, and decimal portion is u, and the integral portion of y' is 1, and decimal portion is v. If pixel value of the pixel (x', y') in the first image is Pp(x', y'), the pixel value Pp(x', y') is acquired by a formula, Pp(x', y') = Pp(k + u, l + v) = Pp(k, l)(l - u)(l- v) + Pp(k + 1, l)u(l- v) + Pp(k, l+1)(l- u)l + Pp(k + l, l + 1)kl. Further, amount of correction upon correcting the second brightness information is calculated as follows. It is assumed that the exposure time (exposure time of the first image), controlled in order to acquire adequate exposure by the first control means, is To, and the exposure time (exposure time of the second image), controlled in order to suppress image blur by the second control means, is Tx, and Tr = Tx/To. If the pixel value of the pixel (x, y) in the second image is Ps(x, y), the pixel value Pa(x, y) to be corrected by the correcting means for second brightness information is expressed by a formula, Pa(x, y) = (Pp(x', y') + Ps(x, y)Tr)/2. Therefore, the second brightness information is corrected by the pixel value Pa(x, y) by means of the pixel value Pp(x', y') as the first brightness information and of the pixel value Ps(x, y) as the second brightness information

Note that the first control means and the second control means may be controlled, so that data amount of the first image information is smaller than that of the second image information. The 'smaller data amount' means that, for example, size of the first image is smaller than that of the second image. This is effective in the case of image apparatus such as a mobile phone equipped with a camera, of which memory capacity is limited, because the data amount is reduced and memory amount for storing the first image information is also reduced. Further, by utilizing a small preview image as the first image, or by reducing size by means of the after-mentioned addition of pixel, it is possible to reduce data amount.

### <Processing Flow>

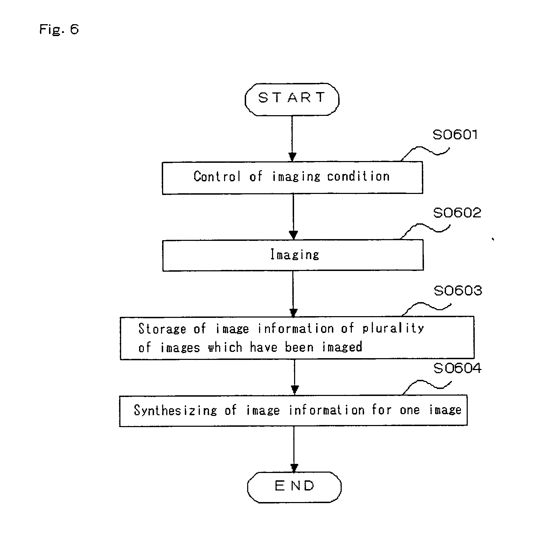

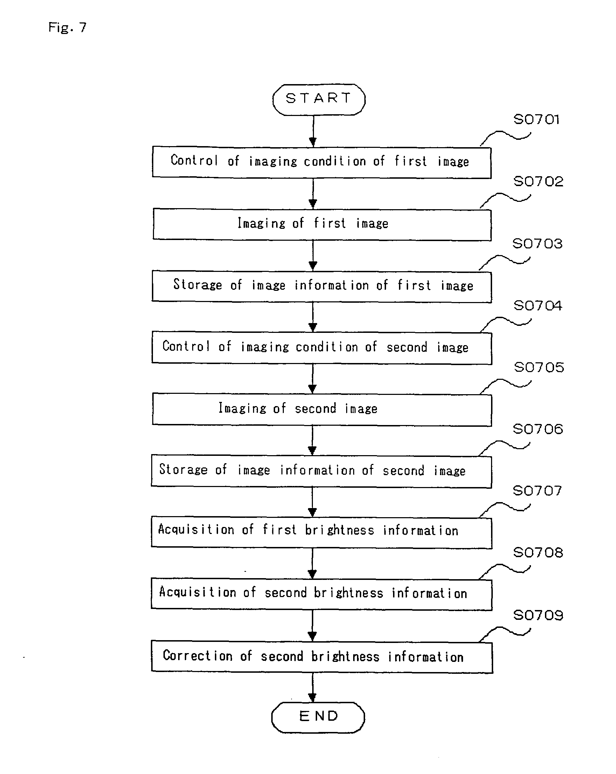

Fig. 6 and 7 are flow charts of an imaging apparatus of the first embodiment. The imaging apparatus carries out the processes as shown in Fig. 6 and 7 upon imaging an object by click of a shutter by a user etc. Fig. 6 is flow charts of an imaging apparatus having a configuration of Fig. 1, and Fig. 7 is flow charts of an imaging apparatus having a configuration of Fig. 2.

Fig. 6 is described. At the outset, imaging condition is controlled. This processing is executed by the control unit (step S0601). Subsequently, imaging is carried out under the imaging condition controlled by the control step (S0601). This processing is executed by the imaging unit (imaging step S0602). Subsequently, the image information of a plurality of images imaged within a short period of time under various imaging conditions controlled by the control step (S0602) are stored. This processing is executed by the storage unit (storing step S0603). Finally, the image information of an image is synthesized by partially utilizing image information of the plurality of images stored by the storing step (S0603). This processing is executed by the synthesizing unit (synthesizing step S0604).

Subsequently, Fig. 7 is described. At the outset, imaging condition is controlled in order to acquire an image of adequate exposure. This processing is executed by the first control means (first control step S0701). Subsequently, imaging is carried out under the imaging condition controlled by the first control step (50701). This processing is executed by the imaging unit (imaging step for first image S0702). Subsequently, the image information of the first image imaged by the imaging step for first image (S0702) is stored. This processing is executed by the storage unit (storing step for first image information S0703). Subsequently, imaging condition is controlled so that a second image is imaged at relatively high shutter speed. This processing is executed by the second control means (second control step S0704). Subsequently, imaging is carried out under the imaging condition controlled by the second control step (S0704). This processing is executed by the imaging unit (imaging step for second image S0705). Subsequently, the image information of the second image imaged by the imaging step for second image (S0705) is stored. This processing is executed by the storage unit (storing step for second image information S0706). Note that the order from the first control step (S0701) to the storing step for first image information (S0703) and the order from the second control step (S0704) to the storing step for second image information (S0706) may be reversed. Therefore, an order of imaging of the first image and imaging of the second image is no object. Subsequently, the first brightness information of the first image is acquired. This process is executed by the acquisition means for first brightness information (acquisition step for first brightness information S0707). Subsequently, the second brightness information of the second image is acquired. This process is executed by the acquisition means for second brightness information (acquisition step for second brightness information S0708). Finally, the second brightness information acquired by acquisition step for second brightness information (S0708) is corrected by the first brightness information acquired by acquisition step for first brightness information (S0707). This process is executed by the correction means for second brightness information (correction step for second brightness information S0709).

### <Brief Description of Effects of First Embodiment>

According to the imaging apparatus of the first embodiment, it is possible to acquire an image, which is under exposure, but includes suppressed image blur, by means of a plurality of images imaged under various imaging conditions. Specifically, by means of the first image, which is an image of adequate exposure, but includes a high possibility of image blur, and of the second image, which is an image of under exposure, but includes suppressed image blur, it is possible to correct the second brightness information of the second image by means of the first brightness information of the first image, thereby acquiring an image, which includes suppressed image blur.

### <<Second embodiment>>

### <Concept of Second Embodiment>

The imaging apparatus of the second embodiment carries out synthesizing by means of a preview image having small size, thereby being applicable to a camera of a mobile phone equipped with a camera having limitation on its processing speed and on its memory capacity.

### <Configuration>

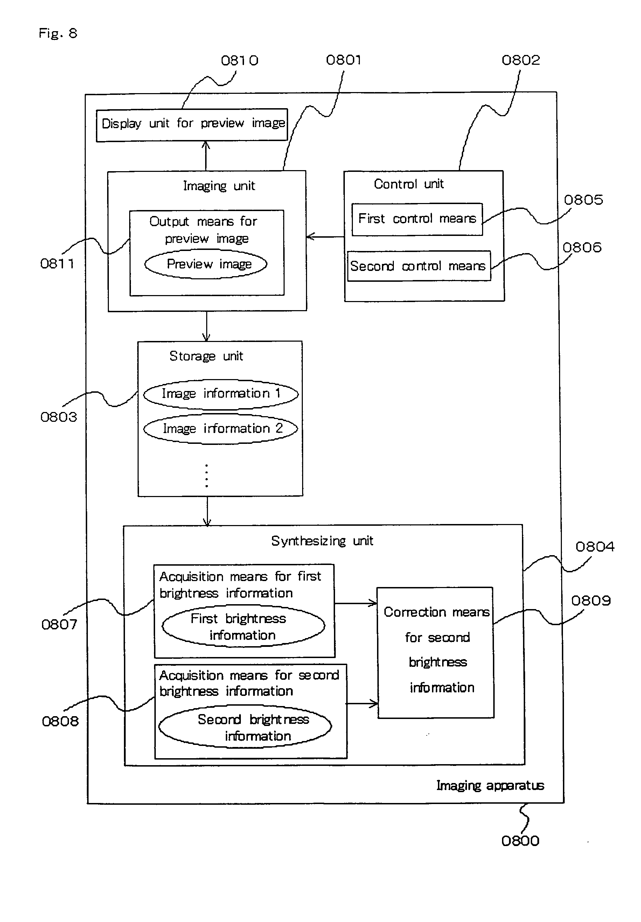

Fig. 8 is a functional block diagram of imaging apparatuses of the second embodiment. In Fig. 8, an imaging apparatus (0800) comprises, an 'imaging unit' (0801), a 'control unit' (0802), a 'storage unit' (0803), a 'synthesizing unit' (0804), and a 'display unit for preview image' (0810). Moreover, the imaging unit (0801) comprises an 'output means for preview image' (0811). Moreover, said control unit (0802) comprises, a 'first control means' (0805), and a 'second control means' (0806). Moreover, said synthesizing unit may comprise, an 'acquisition means for first brightness information' (0807), an 'acquisition means for second brightness information' (0808), and a 'correction means for second brightness information' (0809). Therefore, the imaging apparatus as shown in Fig. 8 further comprises the 'display unit for preview image' (0810), and the 'output means for preview image' (0811) as compared to the imaging apparatus shown in Fig. 2.

The 'display unit for preview image' (0810) is utilized as a finder. The terms 'utilized as a finder' means that a user utilizes it for viewing an object captured by a camera upon imaging the object by the imaging apparatus. Therefore, the 'finder' includes not only a finder of a digital camera etc., but also a liquid crystal display in cases where the imaging apparatus is a mobile phone equipped with a camera, and an object captured by the camera is displayed on the liquid crystal display of the mobile phone. In Fig. 17, the display unit for preview image corresponds to the monitor (1708).

The 'output means for preview image' (0811) has a function of outputting a preview image to the display unit for preview image (0810) at a predetermined interval. The 'predetermined interval' depends on a standard of imaging apparatus, and is, for example, 30 to 60 ms. in the case of a mobile phone equipped with a camera. The 'preview' means that a user views an object captured by a camera when imaging the object by using the imaging apparatus. Further, the 'preview image' is an image displayed in such case. For example, in cases where the imaging apparatus is a mobile phone equipped with a camera, the preview image is an image displayed on a liquid crystal display upon capturing the object in order to image it. Normally, the preview image is smaller than the target image. In acquiring the preview image, similar to the case of target image, for example in Fig. 17, light from the object is received by the CCD (1702) thorough the lens (1701), and is converted to electrical signal, and the electrical signal is converted to digital signal by the A/D converter (1703), thereby acquiring the preview image. Further, the output means for preview image outputs the acquired image to the monitor (1708) as the display unit for preview image (0810) thorough the output unit for image (1707). Further, the output unit for preview image may include a program for causing the CPU (1704) to execute the above process.

Further, the first image imaged under control by the first control means (0805) is the preview image. Since the preview image is smaller than the target image, it is possible to reduce amount of the image information of the image stored in the imaging apparatus in order to carry out synthesizing. Specifically, even in the case of the imaging apparatus such as the mobile phone equipped with a camera having limitation on its memory capacity, it is possible to acquire an image including suppressed image blur. Note that the order of imaging of the preview image and imaging of the second image is no object.

### <Processing Flow>

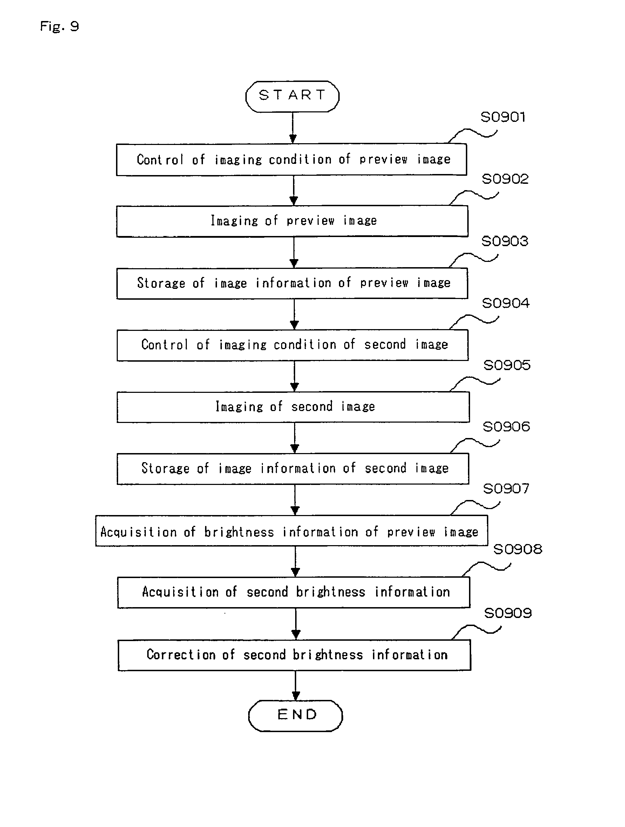

Fig. 9 is a flow chart of an imaging apparatus of the second embodiment. The imaging apparatus carries out the processes as shown in Fig. 9 upon imaging an object by click of a shutter by a user etc. At the outset, imaging condition is controlled in order to acquire a preview image of adequate exposure. This processing is executed by the first control means (first control step for preview S0901). Subsequently, imaging of the preview image is carried out under the imaging condition controlled by the first control step for preview (S0901). This processing is executed by the output means for preview image (imaging step for preview image S0902). Subsequently, the image information of the preview image imaged by the imaging step for preview image (S0902) is stored. This processing is executed by the storage unit (storing step for preview image information S0903). Subsequently, imaging condition is controlled so that a second image is imaged at relatively high shutter speed. This processing is executed by the second control means (second control step S0904). Subsequently, imaging is carried out under the imaging condition controlled by the second control step (S0904). This processing is executed by the imaging unit (imaging step for second image S0905). Subsequently, the image information of the second image imaged by the imaging step for second image (S0905) is stored. This processing is executed by the storage unit (storing step for second image information S0906). Note that the order from the first control step for preview (S0901) to the storing step for preview image information (S0903) and the order from the second control step (S0904) to the storing step for second image information (S0906) may be reversed. Therefore, an order of imaging of the preview image and imaging of the second image is no object. Subsequently, the brightness information of the preview image is acquired as the first brightness information. This process is executed by the acquisition means for first brightness information (acquisition step for brightness information of preview image S0907). Subsequently, the second brightness information of the second image is acquired. This process is executed by the acquisition means for second brightness information (acquisition step for second brightness information S0908). Finally, the second brightness information acquired by acquisition step for second brightness information (S0908) is corrected by the brightness information of the preview image acquired by acquisition step for brightness information of preview image (S0907). This process is executed by the correction means for second brightness information (correction step for second brightness information dependent on brightness information of preview image S0909).

Note that in the imaging apparatus of the second embodiment, whenever imaging function of the imaging apparatus is used, the first control step for preview (S0901) to the storing step for preview image information (S0903) are executed, and based on the image information of preview image stored in the storing step for preview image information (S0903), the preview image is outputted to the display unit for preview image, and is displayed.

### <Brief Description of Effects of Second Embodiment>

According to the imaging apparatus of the second embodiment, it is possible to acquire an image including suppressed image blur by utilizing preview image, of which size is small, as the first image, even in the case of the imaging apparatus such as the mobile phone equipped with a camera having limitation on its memory capacity.

### <<Third embodiment>>

### <Concept of Third Embodiment>

The imaging apparatus of the third embodiment can control shutter speed so as to suppress image blur in order to image the second image, so that it is possible to acquire an image including suppressed image blur just by correcting the brightness information of the second image.

### <Configuration>

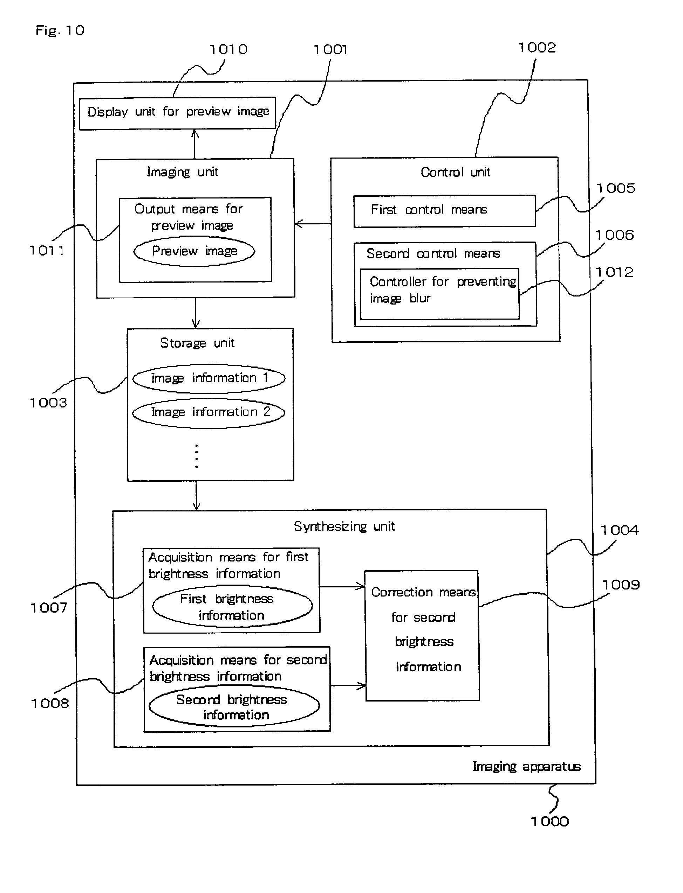

Fig. 10 is a functional block diagram of imaging apparatuses of the third embodiment. Fig. 10 shows a configuration of the imaging apparatus, shown in Fig. 2, of the first embodiment or of the second embodiment plus the 'control unit for preventing image blur' (1012). In Fig. 10, in addition to the imaging apparatus described in the second embodiment, the imaging apparatus further comprises the 'control unit for preventing image blur' (1012). The imaging apparatus (1000) comprises, an 'imaging unit' (1001), a 'control unit' (1002), a 'storage unit' (1003), a 'synthesizing unit' (1004), and a 'display unit for preview image' (1010). Moreover, the imaging unit (1001) comprises an 'output means for preview image' (1011). Moreover, said control unit (1002) comprises, a 'first control means' (1005), and a 'second control means' (1006). Moreover, said synthesizing unit (1004) comprises, an 'acquisition means for first brightness information' (1007), an 'acquisition means for second brightness information' (1008), and a 'correction means for second brightness information' (1009). Moreover, the 'second control means (1006) comprises the 'control unit for preventing image blur' (1012).

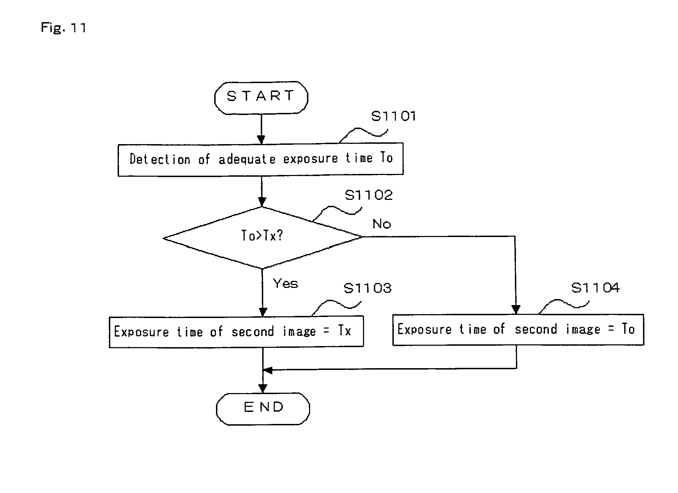

The 'control unit for preventing image blur' (1012) has a function of controlling shutter speed so as to suppress image blur in order to image the second image. The 'shutter speed so as to suppress image blur' generally corresponds to a shutter speed under 16 ms., but is not to limited to this value. Fig. 11 is a flow chart exemplifying concrete process of a controller for preventing image blur. In the normal imaging apparatus, exposure time is determined according to surrounding brightness etc. This exposure time is To. The shutter speed so as to suppress image blur is Tx. At the outset, the adequate exposure time To is detected according to surrounding brightness etc (step S1101). Subsequently, it is determined whether the adequate exposure time To, detected by step S1101, is longer than Tx (step S 1102). If the determination result by step S 1102 indicates that To is longer than Tx, it is determined that the exposure time of the second image is Tx (step S 1103). If the determination result by the step S 1102 indicates that To is shorter than Tx, it is determined that the exposure time of the second image is To (step S 1 104). In processing by the controller for preventing image blur, for example, amount of light received by the CCD (1702) through the lens (1701) is measured, so that it is possible to automatically determine the adequate exposure time To, and it is stored in a predetermined storage area such as the temporary memory (1705). Further, the value of Tx, shutter speed so as to suppress image blur, is stored in a predetermined storage area such as the temporary memory (1705) or the storage (1706). Subsequently, the above To and Tx are read from a predetermined storage area, and are compared, and comparison result is stored in a predetermined storage area such as the temporary memory (1705). The stored comparison result is read, and if it indicates that To > Tx, the value of Tx is written into the predetermined storage area storing the value of exposure time of the second image, and if it indicates that To <= Tx, the value of To is written into the predetermined storage area storing the value of exposure time of the second image. Therefore, the exposure time of the second image is controlled to be a shutter speed so as to suppress image blur. Further, the controller for preventing image blur may include a program for causing the CPU (1704) to execute the above process.

### <Processing Flow>

The processing flow of the imaging apparatus of the third embodiment is the same as that of the imaging apparatus in Fig. 7 of the first embodiment, or of the second embodiment. Note that the shutter speed is controlled by the second control step so as to suppress image blur in order to image the second image.

### <Brief Description of Effects of Third Embodiment>

According to the imaging apparatus of the third embodiment, it is possible to control shutter speed so as to suppress image blur in order to image the second image, thereby acquiring an image including suppressed image blur just by correcting the brightness information of the second image.

### <<Fourth embodiment>>

### <Concept of Fourth Embodiment>

In the imaging apparatus of the fourth embodiment, the first image is imaged by pixel summing operation, thereby reducing data amount of the first image information.

### <Configuration>

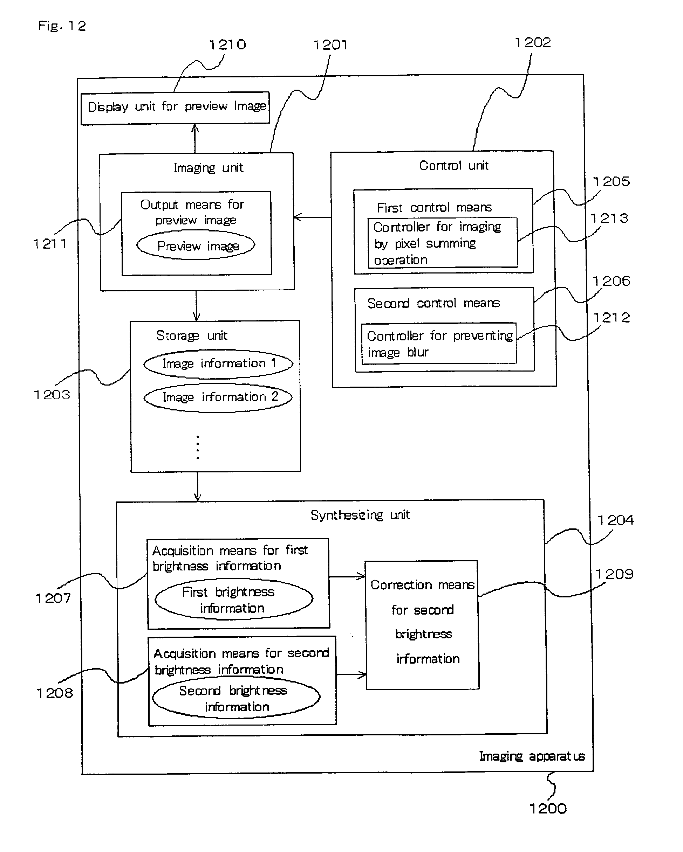

Fig. 12 is a functional block diagram of imaging apparatuses of the fourth embodiment. Fig. 12 shows a configuration of the imaging apparatus, shown in Fig. 2, of the first embodiment or of the second or third embodiment further comprises the 'controller for imaging by pixel summing operation' (1213). In Fig. 12, in addition to the imaging apparatus described in the third embodiment, the imaging apparatus comprises the controller for imaging by pixel summing operation (1213). The imaging apparatus (1200) comprises, an 'imaging unit' (1201), a 'control unit' (1202), a 'storage unit' (1203), a 'synthesizing unit' (1204), and a 'display unit for preview image' (1210). Moreover, the imaging unit (1201) comprises an 'output means for preview image' (1211). Moreover, said control unit (1202) comprises, a 'first control means' (1205), and a 'second control means' (1206). Moreover, said synthesizing unit (1204) comprises, an 'acquisition means for first brightness information' (1207), an 'acquisition means for second brightness information' (1208), and a 'correction means for second brightness information' (1209). Moreover, the first control means (1205) further comprises the 'controller for imaging by pixel summing operation' (1213). Moreover, the 'second control means (1206) comprises the 'control unit for preventing image blur' (1212).

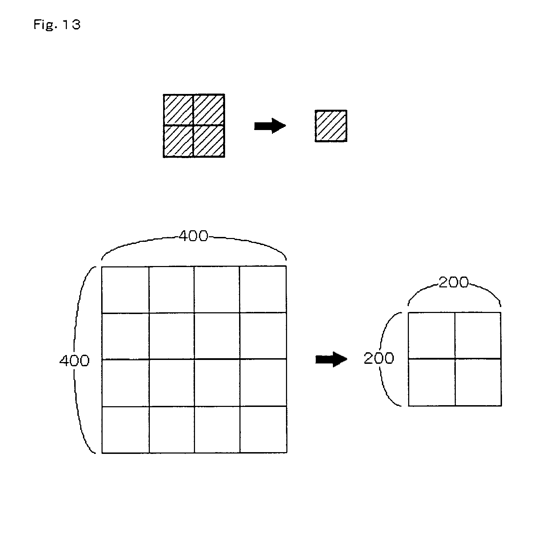

The 'controller for imaging by pixel summing operation' (1213) carries out control so as to image the first image by pixel summing operation. The pixel summing operation is a method for converting four pixels into one pixel as shown in Fig. 13, and in the conversion, pixel value of one pixel is acquired by summing operation of the pixel values of four pixels. For example, an image of 200 × 200 pixels is acquired from an image of 400 × 400 pixels by pixel summing operation.

In this pixel summing operation, pixel value of one pixel is acquired by summing operation of the pixel values of four pixels, so that an image, of which brightness is ensured, is generated even if the original image has insufficient brightness. Therefore, the original image may be an image of under exposure due to high shutter speed. Further, in the case of high-pixel CCD, as entire size of the CCD becomes larger, size of each pixel becomes smaller, so that amount of light received by each pixel becomes smaller. Therefore, sensitivity becomes lower. If signal is amplified in order to correct this, noise is also amplified. Meanwhile, by pixel summing operation, although the image size becomes small, it is possible to ensure brightness without amplifying signal.

### <Processing Flow>

The processing flow of the imaging apparatus of the fourth embodiment is the same as that of the imaging apparatus shown in Fig. 7 of the first embodiment, or of the second or third embodiment. Note that the control is carried out so as to image the first image by pixel summing operation in the first control step or the first control step for preview.

### <Brief Description of Effects of Fourth Embodiment>

According to the imaging apparatus of the fourth embodiment, it is possible to image the first image by pixel summing operation, so that the data amount of the first image is reduced, thereby reducing memory capacity for storing the first image.

### <<Fifth embodiment>>

### <Concept of Fifth Embodiment>

An imaging apparatus of the fifth embodiment can detect motion vector between a plurality of images, so that it is possible to detect positional difference, and to carry out synthesizing in cases where positional difference between the plurality of images exists.

### <Configuration>

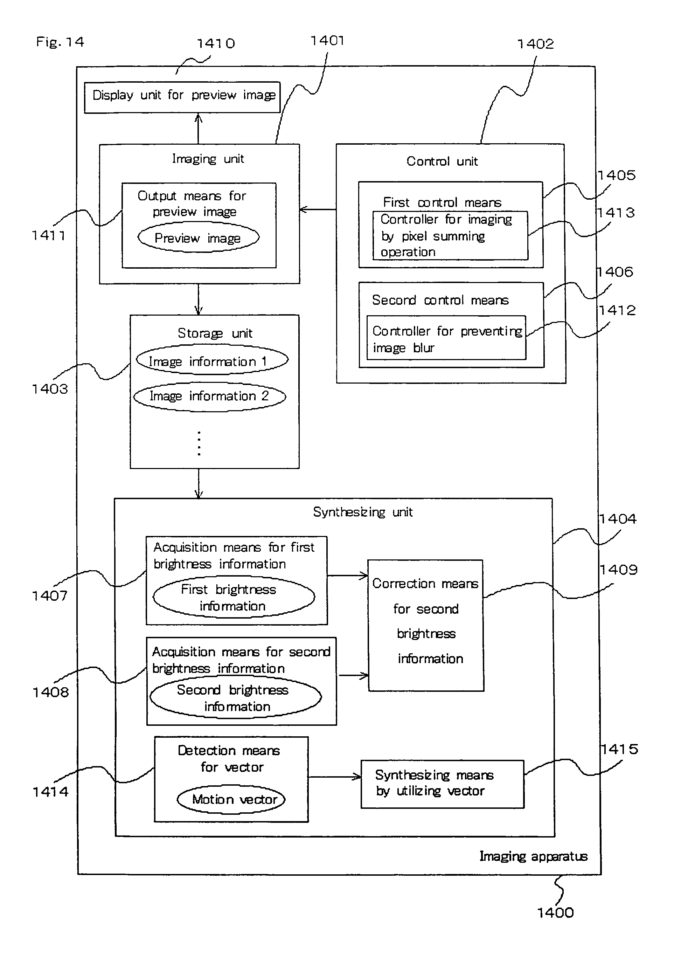

Fig. 14 is a functional block diagram of imaging apparatuses of the fifth embodiment. Fig. 14 shows in addition to a configuration of the imaging apparatus, shown in Fig. 2, of the first embodiment or of the second, third, or fourth embodiment, an imaging apparatus that comprises a 'detection means for vector' (1414), and a 'synthesizing means by utilizing vector' (1415). In Fig. 14, the imaging apparatus described in the fourth embodiment further comprises the 'detection means for vector' (1414), and the 'synthesizing means by utilizing vector' (1415). The imaging apparatus (1400) comprises, an 'imaging unit' (1401), a 'control unit' (1402), a 'storage unit' (1403), a 'synthesizing unit' (1404), and a 'display unit for preview image' (1410). Moreover, the imaging unit (1401) comprises an 'output means for preview image' (1411). Moreover, said control unit (1402) comprises, a 'first control means' (1405), and a 'second control means' (1406). Moreover, said synthesizing unit (1404) comprises, an 'acquisition means for first brightness information' (1407), an 'acquisition means for second brightness information' (1408), a 'correction means for second brightness information' (1409), the 'detection means for vector' (1414), and the 'synthesizing means by utilizing vector' (1415). Moreover, the first control means (1405) comprises the 'controller for imaging by pixel summing operation' (1413). Moreover, the 'second control means (1406) further comprises the 'control unit for preventing image blur' (1412).

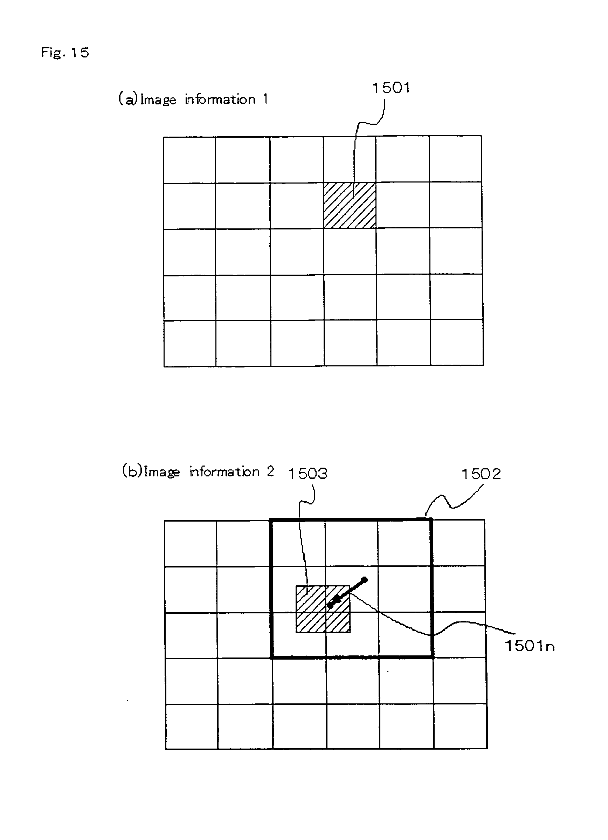

The 'detection means for vector' (1414) has a function of detecting motion vector between the plurality of images. The terms 'detecting motion vector between the plurality of images' is to detect direction and distance of the positional difference (motion vector), in cases where intervals of imaging a plurality of images are wide, thereby causing positional difference between the images due to camera shaking etc. The detected motion vector is utilized for matching positions of images when carrying out synthesizing by means of a plurality of images in the synthesizing means by utilizing vector (1415). As a method for detecting motion vector, block matching etc. may be used. The block matching is well known as image matching processing. It will be described with reference to Fig. 15. The block matching is a method for acquiring positional variation of partial image in successive two still images. For example, the position in the image of the image information 2 in Fig. 15(b), to which an object image in the shaded grid area (1501) in the image of the image information 1 in Fig. 15(a) moves, is determined. At the outset, the search range (1502), configured by a central block having the same position as the grid area (1501), and by block group including a predetermined number of blocks, is determined. Subsequently, from the search range, by utilizing pixel value and distribution information etc., a block (1503), most approximate to the object image in the grid area (1501) in Fig. 15(a), is determined. Subsequently, from the vertical and horizontal distances, the motion vector (1501n) in the grid area (1501) is detected. Further, in a method for determining the grid area (1501) for detecting motion, edge extraction is carried out, thereby determining a block including more sharply-defined images as the grid area (1501). Further, in cases where sizes of the plurality of images are different, large image is reduced to small image, and motion vector may be detected by block matching etc.

The 'synthesizing means by utilizing vector' (1415) has a function of carrying out the synthesizing by utilizing the motion vector detected by the detection means for vector (1414). Therefore, the motion vector detected by the detection means for vector indicates distance (Mx, My) of positional difference included in the formula 2, so that it is possible to carry out synthesizing considering positional difference between a plurality of images.

### <Processing Flow>

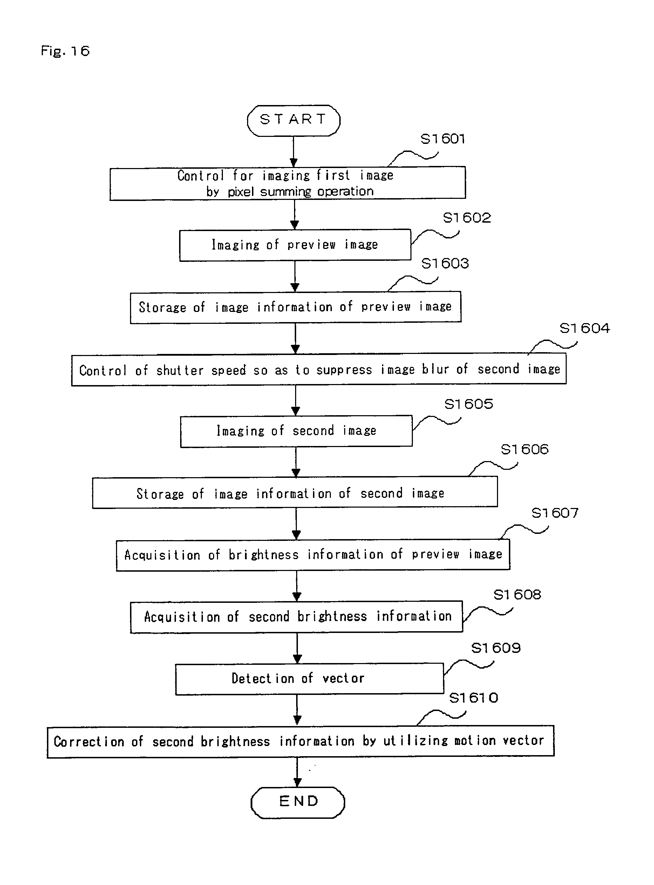

Fig. 16 is a flow chart of an imaging apparatus of the fifth embodiment. The imaging apparatus carries out the processes as shown in Fig. 16 upon imaging an object by click of a shutter by a user etc. At the outset, imaging condition is controlled in order to acquire the first image of adequate exposure by pixel summing operation. This processing is executed by the control unit for imaging by pixel summing operation (first control step by pixel summing operation S1601). Subsequently, imaging of the preview image as the first image is carried out under the imaging condition controlled by the first control step by pixel summing operation (S1601). This processing is executed by the output means for preview image (imaging step for preview image controlled by pixel summing operation S1602). Subsequently, the image information of the preview image imaged by the imaging step for preview image controlled by pixel summing operation (S 1602) is stored. This processing is executed by the storage unit (storing step for preview image information controlled by pixel summing operation S1603). Subsequently, shutter speed is controlled so as to suppress image blur in order to image the second image. This processing is executed by the control unit for preventing image blur (second control step for preventing image blur S1604). Subsequently, imaging is carried out under imaging condition controlled by the second control step for preventing image blur (S1604). This processing is executed by the imaging unit (imaging step for second image controlled in order to prevent image blur S1605). Subsequently, the image information of the second image imaged by the imaging step for second image controlled in order to prevent image blur (S1605) is stored. This processing is executed by the storage unit (storing step for second image information controlled in order to prevent image blur S1606). Note that the order from the first control step for preview controlled by pixel summing operation (S1601) to the storing step for preview image information controlled by pixel summing operation (S1603) and the order from the second control step for preventing image blur (S1604) to the storing step for second image information controlled in order to prevent image blur (S1606) may be reversed. Therefore, an order of imaging of the preview image and imaging of the second image is no object. Subsequently, the brightness information of the preview image is acquired as the first brightness information. This process is executed by the acquisition means for first brightness information (acquisition step for brightness information of preview image S1607). Subsequently, the second brightness information of the second image is acquired. This process is executed by the acquisition means for second brightness information (acquisition step for second brightness information S1608). Subsequently, the motion vectors of the first and second images are detected. This process is executed by the detection means for vector. Further, this process may be executed preceding the acquisition step for brightness information of preview image (S1607) or the acquisition step for brightness information of preview image (S1607) (detection step for vector S1609). Finally, the second brightness information acquired by acquisition step for second brightness information (S1608) is corrected by the brightness information of the preview image acquired by acquisition step for brightness information of preview image (S1607) by means of the motion vector detected by the detection step for vector (S 1609). This process is executed by the synthesizing means by utilizing vector (synthesizing step by utilizing vector S1610).

Note that in the imaging apparatus of the fifth embodiment, whenever imaging function of the imaging apparatus is used, the first control step for preview by pixel summing operation (S1601) to the storing step for preview image information controlled by pixel summing operation (S1603) are executed, and based on the image information of preview image stored in the storing step for preview image information controlled by pixel summing operation (S1603), the preview image is outputted to the display unit for preview image, and is displayed.

### <Brief Description of Effects of Fifth Embodiment>

According to the imaging apparatus of the fifth embodiment can detect motion vector between a plurality of images, so that it is possible to detect positional difference, and to carry out synthesizing in cases where positional difference between the plurality of images exists.

## Claims

1. An imaging apparatus, comprising:
an imaging unit;
a control unit, which controls imaging condition in the imaging unit;
a storage unit, which stores image information of a plurality of images imaged within a short period of time under various imaging conditions controlled by the control unit; and
a synthesizing unit, which synthesizes image information of an image by partially utilizing image information of said plurality of images.

2. The imaging apparatus according to Claim 1, wherein
said control unit further comprises,
first control means, which carries out control, such that a first image, one of a plurality of images to be imaged, is an image of adequate exposure, and
second control means, which carries out control, such that a second image, one of a plurality of images to be imaged, is imaged at relatively high shutter speed, and
said synthesizing unit further comprises,
acquisition means for first brightness information, which acquires first brightness
information of said first image,
acquisition means for second brightness information, which acquires second brightness information of said second image, and
correction means for second brightness information, which corrects said second brightness information by means of said first brightness information.

3. The imaging apparatus according to Claim 2, further comprising:
a display unit for preview image, which is utilized as a finder, wherein
the imaging unit, comprises,
output means for preview image, which outputs a preview image to the display unit for preview image at a predetermined interval, and
the first image imaged under control by said first control means is said preview image.

4. The imaging apparatus according to Claim 2 or 3, wherein
the second control means, further comprises
a controller for preventing image blur, which controls shutter speed so as to suppress image blur in order to image the second image.

5. The imaging apparatus according to any one of Claims 2 to 4, wherein
the first control means, further comprises
a controller for imaging by pixel summing operation, which carries out control so as to image the first image by pixel summing operation.

6. The imaging apparatus according to any one of Claims 2 to 5, wherein
the first control means and the second control means carry out control so that the first image information includes less amount of data than that of the second image information.

7. The imaging apparatus according to any one of Claims 1 to 6, wherein
said synthesizing unit comprises
detection means for vector, which detects motion vector between said plurality of images, and
synthesizing means by utilizing vector, which carries out said synthesizing by utilizing the motion vector detected by said detection means for vector.

8. An imaging method, comprising:
an imaging step;
a control step, which controls imaging condition in the imaging step;
a storage step, which stores image information of a plurality of images imaged within a short period of time under imaging condition controlled by the control step; and
a synthesizing step, which synthesizes image information of an image by partially utilizing image information of said plurality of images.

9. The imaging method according to Claim 8, wherein
a first control step, which carries out control, such that a first image, one of a plurality of images to be imaged, is an image of adequate exposure, and
a second control means, which carries out control, such that a second image, one of a plurality of images to be imaged, is imaged at relatively high shutter speed, and
said synthesizing step further comprises,
an acquisition step for first brightness information, which acquires first brightness
information of said first image,
an acquisition step for second brightness information, which acquires second brightness information of said second image, and
a correction step for second brightness information, which corrects said second brightness information by means of said first brightness information.

10. The imaging method according to Claim 9, further comprising:
a display step for preview image, which is utilized as a finder, wherein
the imaging step, comprises,
output step for preview image, which outputs a preview image for preview in the display step for preview image at a predetermined interval, and
the first image imaged under control of said first control step is said preview image.
